(19) Europäisches Patentamt
European Patent Office
Office européen des brevets

(11) **EP 2 442 272 A1**

(12) **EUROPEAN PATENT APPLICATION**

(43) Date of publication:
**18.04.2012 Bulletin 2012/16**

(51) Int Cl.:
*G06T 5/00* (2006.01)     *H04N 5/232* (2006.01)

(21) Application number: **10306114.9**

(22) Date of filing: **14.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
• **Theis, Oliver
  30655 Hannover (DE)**
• **Schuetze, Herbert
  29227 Celle (DE)**

(74) Representative: **Schmidt-Uhlig, Thomas
Deutsche Thomson OHG
European Patent Operations
Karl-Wiechert-Allee 74
30625 Hannover (DE)**

(54) **Method and device for digital image processing**

(57)     A method and an apparatus for processing a digital image ($P$) are proposed. The method has the steps of:
- retrieving an image ($P$) and depth information ($D_{object}$) of the image ($P$);

- performing a space variant image deconvolution (**I**) using the depth information ($D_{object}$) to obtain an intermediate image ($P_{sharp}$) ; and
- applying (**II**) characteristics of a virtual lens ($M_{vir}$) to the intermediate image ($P_{sharp}$) to obtain a processed image ($P_{vir}$) .

**Fig. 5**

**Description**

The present invention relates to the field of digital image capturing and processing, especially image deconvolution, for still and motion picture cameras in conjunction with depth capturing devices.

Traditional digital imaging devices consisting of a lens and an array sensor map 3D-scenes into a 2D-image representation. During this mapping information about the distance between the camera and an object is lost. The perceived depth within a picture results from the perspective, an a priori knowledge about the size of certain objects, and differences in the sharpness of different objects. The latter is an inherent property of refractive optics, which have a sharp focal plane, or more accurately a sharp (curved) surface, a certain depth of field which is also perceived as relatively sharp, and a more or less unsharp out of focus area.

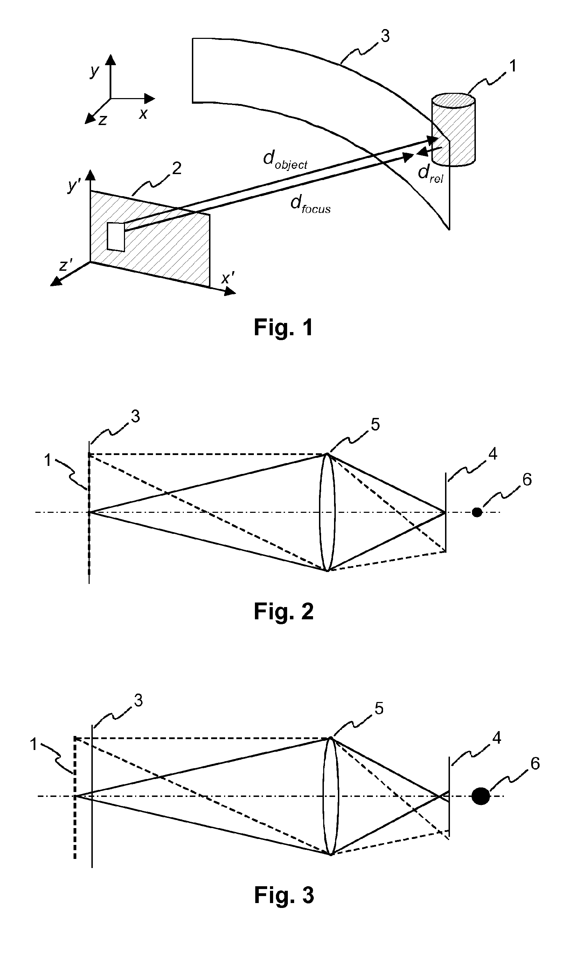

This imaging process is schematically depicted in Fig. 1 and can be modeled by a convolution process of a scene $s\,(x,y,z)$ with a variant kernel $k(d_{rel})$ known as point spread function, which results in an image $p(x',y')$:

$$p = s * k.$$

The convolution kernel k is known to be a function of the relative depth $d_{rel}=d_{object}-d_{focus}$, where $d_{object}$ is the distance between an object 1 and the image plane 2 and $d_{focus}$ is the distance between focal surface 3 and the image plane 2. In other words, $d_{rel}$ is defined as the positive or negative distance between the focal surface 31 and the object 1 for each pixel.

The matrix $\boldsymbol{D}_{rel}$ therefore represents a matrix of the same size as p holding the relative distance $d_{rel}$ for each pixel.

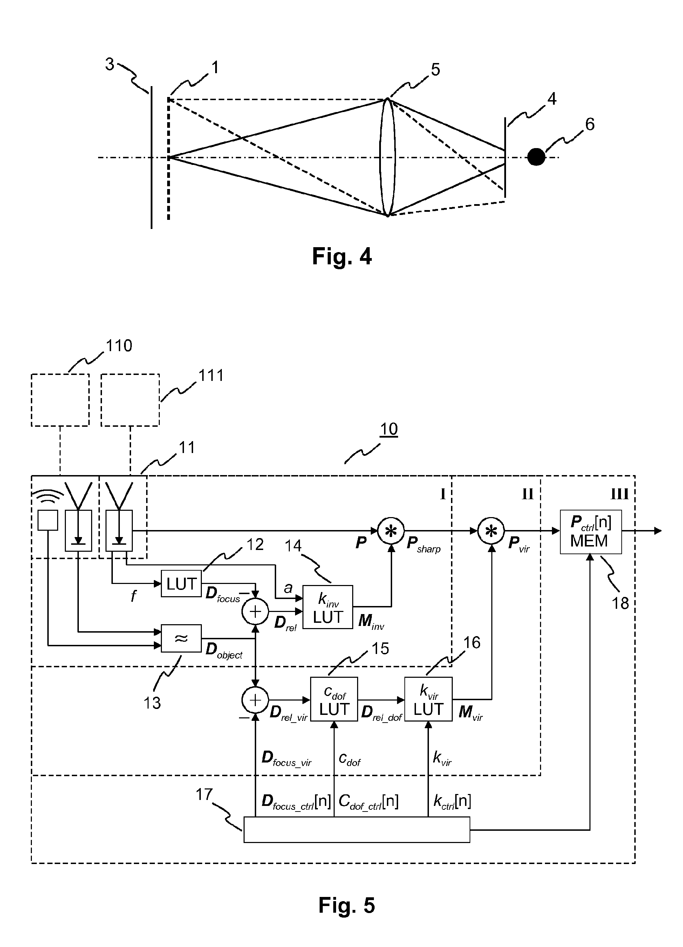

In Figs. 2 to 4 it is shown how the spread 6 (schematically depicted as a black circular area) of k in an image plane 4 of a lens 5 varies with the distance of the object 1 relative to the focal surface 3 of the lens 5. The focal surface 3 here is depicted as a plane. Apparently the point spread function with the smallest spread 6 is found when the object 1 is located in the focal plane 3 (depicted in Fig. 2), whereas an object 1 located behind the focal plane 3 (depicted in Fig. 3) or before the focal plane 3 (depicted in Fig. 4) leads to an increased spread. The spread is correlated to the distance $d_{rel}$ between the object 1 and the focal plane 3.

For certain applications it would be useful to change the conditions under which an image was captured, such as focus or aperture, in order to modify the local sharpness of some regions, e.g. to alter the region of interest, to correct misfocus or to decrease or increase the depth of field. This requires knowledge of the convolution kernel k underlying different regions within an image in order to perform deconvolution for sharpening. As stated above, $k$ heavily depends on the parameter $d_{rel}$, but information about the precise depth is normally lost during the imaging process. This generally prohibits to perform automatic, non-blind image deconvolution techniques after acquisition.

A known sharpening technique is 'unsharp masking', where highfrequency boost filtering is performed in a user interactive "trial and error" way. This method relies on the difference of Gaussians (DOG) and, therefore, does not take into account the exact point spread function. Furthermore, the method requires user interaction and image quality observance to avoid over-sharpening.

A technique explicitly using the measured point spread function in order to perform image deconvolution is given in A. Levin et al.: "Image and Depth from a Conventional Camera with a Coded Aperture", ACM Transactions on Graphics Vol. 26 (2007). This method uses a coded aperture to compute a depth map to find the right convolution kernel for inversion of different image regions. Unfortunately, the method suffers from inversion difficulties due to zero frequencies resulting from aperture coding.

During the last years a device for receiving distance information $d_{object}$ relative to different objects within a scene has evolved, which is known as a time-of-flight-camera. It uses time-varying infra-red lighting to illuminate a scene. The difference in time between emitted light and received light on a photo-detector-array is measured. This results in a matrix $\boldsymbol{D}_{object}$ holding the distance $d_{object}$ for every array element. An introduction into time-of-flight camera is given in T. Möller et al: "Robust 3D Measurement with PMD Sensors", Proc. 1st Range Imaging Research Day (2005), ETH Zurich, Switzerland.

It is an object of the present invention to propose a solution for processing digital images, which allows to alter the conditions under which an image was captured subsequent to image acquisition.

According to the invention, this object is achieved by a method for processing a digital image, which has the steps of:

- retrieving an image and depth information of the image;
- performing a space variant image deconvolution using the depth information to obtain an intermediate image; and
- applying characteristics of a virtual lens to the intermediate image to obtain a processed image.

Similarly, an apparatus for processing a digital image comprises:

- means for retrieving an image and depth information of the image;
- an image deconvolution stage adapted to perform a space variant image deconvolution using the depth information to obtain an intermediate image; and
- a lens simulation stage downstream of the image deconvolution stage, which is adapted to apply characteristics of a virtual lens to the intermediate image to obtain a processed image.

Refraction based optics, i.e. conventional camera lenses, have a focal plane with a certain depth of field, which depends heavily on the f-number of the lens. Corresponding to the position of an object in the depth of field, imaging is more or less sharp due to the varying point spread functions. In order to enable manipulation of captured images after acquisition with a lens, the point spread functions for different depths are measured or simulated for the lens. The inverses of the point spread functions are preferably stored in a look-up table. When depth information is acquired during image capturing, e.g. a depth map, for different regions within the image the inverse of the point spread function can be retrieved from the look-up table. The depth information is advantageously acquired with a time of flight image sensor.

In a first step a space variant image deconvolution using the inverse point spread function is performed to obtain an intermediate image with maximum sharpness over the complete image. For certain applications this look will not be perceived as flat and rather unrealistic due to the lack of depth, which is typically conveyed by front and back focus blurring.

Therefore, in a second step certain characteristics of a user defined virtual lens, e.g. the focal surface, the depth of focus or the point spread function, are applied to the intermediate image using the depth map. For example, if, due to low light or high speed (slow motion) shooting conditions, small f-numbers were required, the depth of field may be increased after acquisition. If, in contrast, maximum sharpness shooting conditions required medium f-numbers (e.g. 5.6 to 8), the depth of field may be decreased after acquisition. Also, the point spread function of a virtual lens may be applied after acquisition, e.g. if a smooth bokeh is desired. In imaging, the bokeh is the blur or the aesthetic quality of the blur in out-of-focus areas of an image.

The invention solves the problem of image manipulation for refractive optics in cases were objects located in front or back of the focus surface are perceived undesirably unsharp. This is achieved by increasing the depth of field either to the front, or the back or both, by shifting, tilting or bending the focal surface, or by applying the point spread function of a virtual lens.

Advantageously, the step of applying characteristics of a virtual lens is repeated with slightly varying settings. In this way a series of images is generated, which, when shown in a sequence, give an impression of motion to the viewer. For this purpose a virtual lens controller controls the characteristics of the virtual lens. The resulting processed images are then stored in a memory.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:

Fig. 1 schematically depicts an imaging process;

Fig. 2 shows the point spread function of an object located in the focal surface;

Fig. 3 shows the point spread function of an object located behind the focal surface;

Fig. 4 shows the point spread function of an object located before the focal surface;

Fig. 5 depicts a block diagram of a image processing device according to the invention,

Fig. 6 shows a first example of the relation between $d_{rel\_dof}$ and $d_{rel\_vir}$,

Fig. 7 depicts a second example of the relation between $d_{rel\_dof}$ and $d_{rel\_virf}$,

Fig. 8 shows a third example of the relation between $d_{rel\_dof}$ and $d_{rel\_virf}$,

Fig. 9 shows a flowchart of the operation of the virtual lens controller,

Fig. 10 schematically depicts a first example of a combined time-of-flight and image camera,

Fig. 11 illustrates a second example of a combined time-of-flight and image camera,

Fig. 12 shows a third example of a combined time-of-flight and image camera, and

Fig. 13 depicts a fourth example of a combined time-of-flight and image camera.

The invention proposes a three stage approach for image manipulation. In a first stage image deconvolution is performed in order to receive a fully sharp image $P_{sharp}$ with virtually infinite depth of field from a captured image $P$. A time-of-flight camera is used to acquire the depth map $D_{object}$ of the scene in order to find the appropriate 4-dimensional deconvolution kernel matrix $M_{inv}$ for space variant deconvolution of P. In a second stage space variant convolution of $P_{sharp}$ is performed with a kernel matrix $M_{vir}$ describing a virtual lens having a predefined focal surface and a predefined depth of field with regard to $D_{object}$. The descriptions contained in the kernel matrix $M_{vir}$ may or may not try to imitate the characteristics of a real lens. In a third stage the operations of the second stage are repeated under slightly different conditions to generate a series of images, which, when shown as a movie, give a perception of dynamic to the viewer. For example, shifting the focal surface smoothly within an image can be used to guide the viewers attention to different regions of interest within a scene or create the effect of camera motion.

Fig. 5 depicts a block diagram of a device 10 using a combined time-of-flight and image camera, which allows to manipulate the impact of physical lens parameters like point spread function, focus or depth of field on an image after acquisition using parameters of a virtual lens. The block diagram gives an overview on the operations on the output of a combined time-of-flight and image camera, which are performed in the above described first, second, and third steps. As such, Fig. 5 also represents a workflow. The three stages are indicated by the dashed rectangles designated by the letters **I, II,** and **III.**

In order to obtain a fully sharp image $P_{sharp}$ with virtually infinite depth of field from an image $P$ captured by a camera 11 a number of operations are performed in the first stage *I*, i.e. the image deconvolution stage. First a 2-dimensional matrix $D_{focus}$ *(f)* describing the distance and the curvature of the focal surface 3 for each image pixel from the focal position *f* delivered by the lens of the camera 11 is looked up. $D_{focus}$ *(f)* is determined beforehand either by simulation or by measurement and stored within a look-up table 12 for a range of parameters *f*. Then a 2-dimensional matrix $D_{object}$, which holds the distance between each image pixel and its corresponding object within the scene, is acquired by a distance determination block 13 from time-of-flight data obtained by the camera 11. Apparently, the image data and the depth information may likewise be obtained from an external camera 110 connected to the device 10, or from a storage device 111. Usually the resolution of depth maps captured by time-of-flight cameras is rather small. Therefore, an upsampling or the application of superresolution techniques is required to make the dimensions of $D_{object}$ equivalent to the image dimension. This is, however, omitted in Fig. 5 for simplicity. In the next step a relative distance matrix $D_{rel}$ is computed by taking the difference between matrix elements:

$$D_{rel} = D_{object} - D_{focus}.$$

Subsequently a 4-dimensional matrix $M_{inv}$ is determined, which holds the space variant deconvolution kernels, by looking up the 2-dimensional point spread function for each combination of $d_{rel}$ and the f-number a of the lens from a look-up table 14 holding $k_{inv}(a, d_{rel})$. The look-up table 14 is a finite precision look-up table implemented in hardware or as a digital signal processor. The point spread function *k* is preferably found either through simulation or measurement for a set of parameters $d_{rel}$ and a. The inverse filter $k_{inv}$ (2D-FIR type) can be found trough direct inversion of the frequency response $K(\omega)$ (Optical Transfer Function, OTF) and taking its inverse Fourier transformation $F^{-1}$:

$$K(\omega) = F(k)$$

$$k_{inv} = F^{-1}\left(\frac{1}{K(\omega)}\right)$$

In cases of zero frequencies or low spectral response of $K(\omega)$ care has to be taken that inversion does not result in inappropriate amplification. Optionally different inverse filter kernels are stored for each of the RGB color channels. Finally, a space variant convolution of $P$ and $M$ is performed to obtain the image $P_{sharp}$:

$$P_{sharp}=P*M$$

An all sharp image $P_{sharp}$ as generated in the first stage $I$ with infinite depth of focus may not give a realistic impression of depth and direct the viewer to certain regions of intended interest. Therefore, it is necessary to reduce the image sharpness in certain areas again in order to generate the effect of focal surface modification, e.g. shift, tilt, or bend, and depth of focus adjustment. This can be regarded as capturing the scene through a virtual lens, which needs not be a realistic type of lens. For example, the virtual lens might have two or more focal surfaces with different depth of focus. In the following, however, a single focal surface is assumed.

To this end, a plurality of operations is performed in the second stage $II$, i.e. the lens simulation stage, to generate an image $P_{vir}$ for the scene s captured through a virtual lens from the image $P_{sharp}$. First the shape and the position of the focal surface of the virtual lens are defined through a matrix $D_{focus-vir}$ provided by a virtual lens controller 17. The matrix $D_{focus-vir}$ specifies the distance between the three-dimensional image plane with the coordinates $x',y',z'$ and the virtual focal surface. Then the relative distance between the distance of image objects given by $D_{object}$ and the focal surface is computed for each pixel:

$$D_{rel\_vir}=D_{object}-D_{focus\_vir}$$

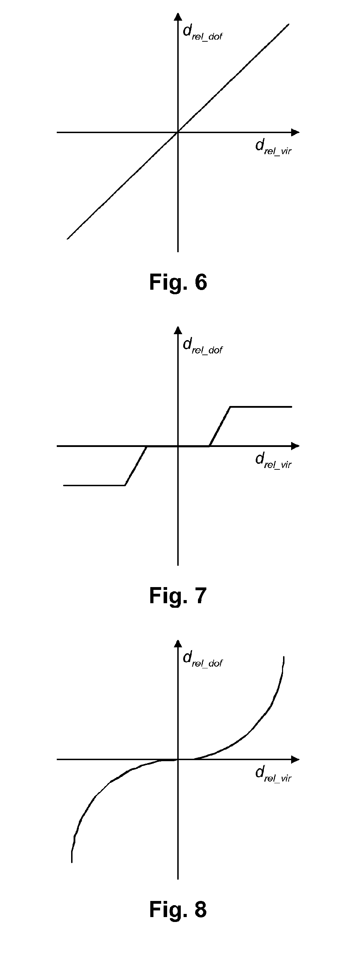

Subsequently the depth of focus is defined by mapping each element of the matrix $D_{rel-vir}$ to a matrix $D_{rel\_dof}$ given by a curve $C_{dof}$, which links $d_{rel\_vir}$ to $d_{rel\_dof}$. Three examples showing how such curves may be defined are illustrated in Figs. 6 to 8. The choice of a specific curve depends on the desired impression of the resulting image. This may also be an artificial impression, which does not correspond to the physical properties of the habitual visual impression. Fig. 6 shows a linear relation between $d_{rel\_dof}$ and $d_{rel\_vir}$. In Fig. 7 there is a stepped relation between $d_{rel\_dof}$ and $d_{rel\_vir}$. Fig. 8 illustrates the case of a 3rd order polynomial relation between $d_{rel\_dof}$ and $d_{rel\_vir}$. Preferably, $C_{dof}$ is retrieved from a look-up table 15, which is especially advantageous in case of more complex curve shapes. The next operation is to look up the point spread function $k_{vir}$ for each element $d_{rel\_dof}$ of $D_{rel\_dof}$ from a look-up table 16. In this way a 4-dimensional matrix $M_{vir}$ is obtained, which holds the 2-dimensional point spread function for each image pixel. The point spread function $k_{vir}$ is advantageously defined and stored in the look-up table 16 beforehand for different out of focus distances $d_{rel\_dof}$. It is likewise possible to combine the depth of focus characteristic with the point spread function in a single look-up table to reduce costs of implementation. However, separating the depth of focus definition and the point spread function definition gives more freedom and clearness. Finally, a space variant convolution of $P_{sharp}$ and $M_{vir}$ is performed to obtain the image $P_{vir}$ captured through an adjustable virtual lens.

$$P_{vir}=P_{sharp}*M_{vir}$$

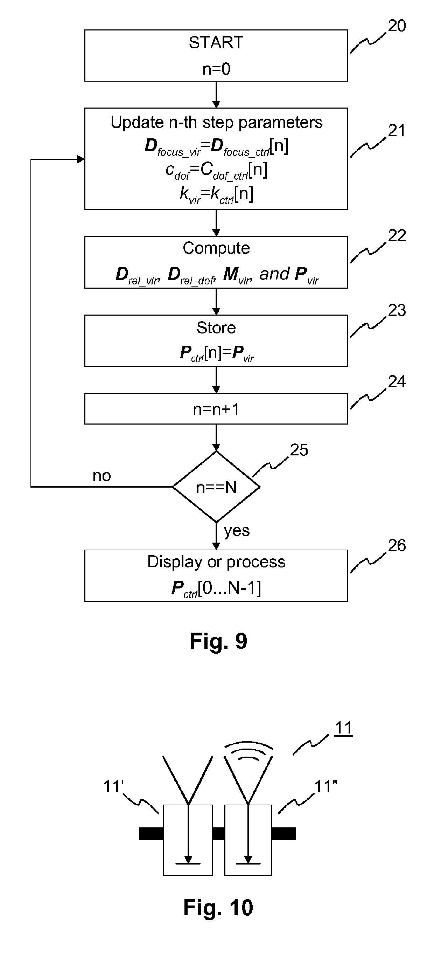

In the third stage III the steps performed in the second stage $II$ are repeated for a number of repetitions N-1 in order to produce certain visual effects. For this purpose the virtual lens controller 17 provides different parameters to the computation units of the second stage $II$. For each step a picture $P_{vir}$ is produced and stored in a memory 18 as $P_{ctrl}$. The resulting flowchart of the operation of the virtual lens controller 17 is illustrated in Fig. 9. After starting 20 the process with n=0 the necessary parameters are updated 21 with the n-th step parameters. Then the matrices $D_{rel\_vir}, D_{rel\_dof},$ and $M_{vir}$ as well as the image $P_{vir}$ are computed 22. The computed image $P_{vir}$ is stored 23 in the memory 18 as $P_{ctrl}[n]$. Subsequently the value on n is increased 24 by '1' and it is checked 25 whether the number N of repetitions has been reached. If this is not the case, the method returns to the updating step 21.

If, however, the desired number N of repetitions has been performed, the stored images $\boldsymbol{P}_{ctrl}[0...N-1]$ are displayed or processed 26.

While the explanations above refer to a single image, i.e. to digital still picture imaging, the concepts of steps **I** and **II** can easily be generalized to motion picture applications.

The camera 11 of Fig. 5, which is a combination of an image camera and a time-of-flight camera, can be realized in various ways. Four possible configurations are schematically illustrated in Figs. 10 to 13.

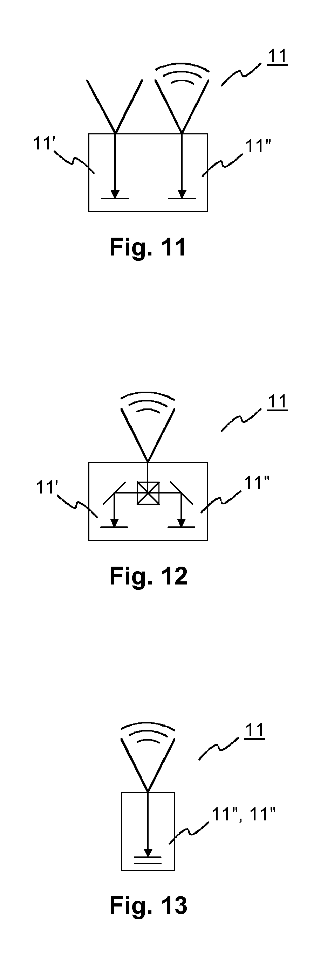

In Fig. 10 the camera 11 consists of a time-of-flight camera 11", which is mounted on a rig close to an image camera 11'. In Fig. 11 the time-of-flight sensor and the image sensor are arranged in the same housing, i.e. the time-of-flight camera 11" and the image camera 11' are combined into a single camera 11 with different lenses and light paths. A further combination of the time-of-flight camera 11" and the image camera 11' is shown in Fig. 12. Again the time-of-flight sensor and the image sensor are arranged in the same housing. However, the two cameras 11', 11" share a single lens. The light paths are split by a beam splitting unit inside the housing. Finally, Fig. 13 illustrates the case of a combined time-of-flight and image sensor with a filtered light path. Again only a single lens is used. Note that in Figs. 10 to 13 a simplified icon is used for time-of-flight camera 11". The icon combines the infrared light source and the corresponding sensor.

Of course, using depth information from a source other than a time-of-flight camera is likewise possible, e.g. using a laser range finder.

**Claims**

1. A method for processing a digital image ($P$), the method having the steps of:

    - retrieving an image ($P$) and depth information ($\boldsymbol{D}_{object}$) of the image ($P$);
    - performing a space variant image deconvolution ($I$) using the depth information ($\boldsymbol{D}_{object}$) to obtain an intermediate image ($\boldsymbol{P}_{sharp}$) ; and
    - applying (**II**) characteristics of a virtual lens ($\boldsymbol{M}_{vir}$) to the intermediate image ($\boldsymbol{P}_{sharp}$) to obtain a processed image ($\boldsymbol{P}_{vir}$) .

2. The method according to claim 1, wherein the space variant image deconvolution ($I$) is performed using inverse point spread functions of a lens used for obtaining the image ($P$).

3. The method according to claim 2, **wherein** the inverse point spread functions of the lens are obtained from a look-up table (14).

4. The method according to claim 2 or 3, **wherein** the inverse point spread functions of the lens are measured or simulated inverse point spread functions.

5. The method according to one of the preceding claims, **wherein** the depth information ($\boldsymbol{D}_{object}$) is a depth map.

6. The method according to one of the preceding claims, **wherein** the step of applying (**II**) characteristics of a virtual lens to the intermediate image ($\boldsymbol{P}_{sharp}$) includes at least one of increasing a depth of field either to the front, or the back or both, and shifting, tilting or bending a focal surface.

7. The method according to one of the preceding claims, wherein the step of applying (**II**) characteristics of a virtual lens to the intermediate image ($\boldsymbol{P}_{sharp}$) is repeated (**III**) with different characteristics.

8. An apparatus (10) for processing a digital image ($P$), the apparatus **comprising**:

    - means (11, 110, 111) for retrieving an image ($P$) and depth information of the image ($P$);
    - an image deconvolution stage (**I**) adapted to perform a space variant image deconvolution using the depth information to obtain an intermediate image ($\boldsymbol{P}_{sharp}$) ; and
    - a lens simulation stage (**II**) downstream of the image deconvolution stage (**I**), which is adapted to apply characteristics of a virtual lens ($\boldsymbol{M}_{vir}$) to the intermediate image ($\boldsymbol{P}_{sharp}$) to obtain a processed image ($\boldsymbol{P}_{vir}$) .

9. The apparatus (10) according to claim 8, **wherein** the image deconvolution stage (**I**) is adapted to use inverse point spread functions of a lens used for obtaining the image (P) for performing a space variant image deconvolution.

**10.** The apparatus (10) according to claim 9, **wherein** the apparatus (10) comprises a look-up table (14) containing the inverse point spread functions of the lens.

**11.** The apparatus (10) according to claim 10, **wherein** the inverse point spread functions of the lens are measured or simulated inverse point spread functions.

**12.** The apparatus (10) according to one of claims 8 to 11,
**wherein** the depth information ($D_{object}$) is a depth map.

**13.** The apparatus (10) according to one of claims 8 to 12,
**wherein** lens simulation stage (**II**) is adapted to perform at least one of increasing a depth of field either to the front, or the back or both, and shifting, tilting or bending a focal surface.

**14.** The apparatus (10) according to one of claims 8 to 13, **further** comprising a virtual lens controller (17) for controlling the characteristics of the virtual lens ($M_{vir}$) and a memory (18) for storing two or more processed images ($P_{vir}$).

**Fig. 1**

**Fig. 2**

**Fig. 3**

**Fig. 4**

**Fig. 5**

**Fig. 6**

**Fig. 7**

**Fig. 8**

Fig. 9

Fig. 10

**Fig. 11**

**Fig. 12**

**Fig. 13**

**EUROPEAN SEARCH REPORT**

Application Number

EP 10 30 6114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GREEN P ET AL: "Multi-aperture photography", ACM TRANSACTIONS ON GRAPHICS, ACM, US, vol. 26, no. 3, 1 July 2007 (2007-07-01), pages 68-1, XP002567376, ISSN: 0730-0301, DOI: DOI:10.1145/1239451.1239519 * abstract * * sections 3.1,3.2,4 * * figures 7,10 * ----- | 1-14 | INV. G06T5/00 H04N5/232 |
| X | LEVIN A ET AL: "Image and depth from a conventional camera with a coded aperture", ACM TRANSACTIONS ON GRAPHICS ACM USA, vol. 26, no. 3, July 2007 (2007-07), pages 1-9, XP002622004, ISSN: 0730-0301 * abstract * * section 1 paragraph 1figures 1,10,13 * * sections 4,5.1,5.2,5.4 * ----- | 1-14 | |
| A | BENJAMIN HUHLE ET AL: "Realistic Depth Blur for Images with Range Data", 9 September 2009 (2009-09-09), DYNAMIC 3D IMAGING, SPRINGER BERLIN HEIDELBERG, BERLIN, HEIDELBERG, PAGE(S) 84 - 95, XP019126937, ISBN: 978-3-642-03777-1 * sections 1,2.1,2.3,3 * ----- | 1-14 | TECHNICAL FIELDS SEARCHED (IPC) G06T H04N |

-/--

The present search report has been drawn up for all claims

| Place of search | Date of completion of the search | Examiner |
|---|---|---|
| Munich | 11 February 2011 | Eveno, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 30 6114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEE S ET AL: "Real-time lens blur effects and focus control", July 2010 (2010-07), ACM TRANSACTIONS ON GRAPHICS 2010 ASSOCIATION FOR COMPUTING MACHINERY USA, VOL. 29, NR. 4, XP002622005, pages 65:1-65:7, * abstract * * section 5 * * figures 1,6 * | 1-14 | |
| A | POTMESIL M ET AL: "SYNTHETIC IMAGE GENERATION WITH A LENS AND APERTURE CAMERA MODEL", ACM TRANSACTIONS ON GRAPHICS, ACM, US, vol. 1, no. 2, 1 April 1982 (1982-04-01), pages 85-108, XP008026192, ISSN: 0730-0301, DOI: DOI:10.1145/357299.357300 * the whole document * | 1-14 | |
| A | YOSUKE BANDO ET AL: "Towards Digital Refocusing from a Single Photograph", COMPUTER GRAPHICS AND APPLICATIONS, 2007. PG '07. 15TH PACIFIC CONFERENCE ON, IEEE, PISCATAWAY, NJ, USA, 1 October 2007 (2007-10-01), pages 363-372, XP031186027, ISBN: 978-0-7695-3009-3 * abstract * * section 1 paragraph 2 * * sections 3.1,3.4 * | 1-14 | TECHNICAL FIELDS SEARCHED (IPC) |
| A | US 7 623 726 B1 (GEORGIEV TODOR G [US]) 24 November 2009 (2009-11-24) * the whole document * | 1-14 | |

The present search report has been drawn up for all claims

| Place of search | Date of completion of the search | Examiner |
|---|---|---|
| Munich | 11 February 2011 | Eveno, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 30 6114

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2011

| Patent document cited in search report | Publication date | Patent family member(s) | Publication date |
|---|---|---|---|
| US 7623726 B1 | 24-11-2009 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. LEVIN et al.** Image and Depth from a Conventional Camera with a Coded Aperture. *ACM Transactions on Graphics,* 2007, vol. 26

- **T. MÖLLER et al.** Robust 3D Measurement with PMD Sensors. *Proc. 1st Range Imaging Research Day,* 2005